# FASCICULE DE BREVET EUROPEEN

(11) **EP 1 367 251 B1**
(45) Date de publication et mention de la délivrance du brevet: **02.11.2006**
(21) Numéro de dépôt: 03291071.3
(22) Date de dépôt: 05.05.2003
(51) Int. Cl.: F02K 7/18, F02K 9/97

(54) **Système d'obturation pour un orifice d'une voie d'introduction d'air dans la chambre de combustion d'un statoréacteur, ainsi que statoréacteur et missile comprenant ledit système**
Verschlusssystem für eine Öffnung einer Lufteinlassleitung einer Brennkammer eines Staustrahltriebwerks, sowie Staustrahltriebwerk und Flugkörper mit einem solchen System
Closure system for an orifice of an air-intake duct of a combustion chamber of a ramjet, as well as ramjet and missile comprising said system

(30) Priorité: 27.05.2002 FR 0206431
(43) Date de publication de la demande: 03.12.2003
(73) Titulaire: MBDA France, 75116 Paris (FR)
(72) Inventeur: Carton, Laurent, 18400 Saint Florent sur Cher (FR)
(74) Mandataire: Hauer, Bernard

(56) Documents cités:
- FR-A- 2 813 344

## Description

La présente invention concerne un système d'obturation pour un conduit. Bien que non exclusivement, elle concerne plus particulièrement un système d'obturation pour un orifice d'une voie d'introduction d'air dans la chambre de combustion d'un statoréacteur.

On sait que les statoréacteurs sont essentiellement constitués par une chambre de combustion, se terminant par une tuyère d'éjection et à l'intérieur de laquelle sont introduits du combustible liquide ou gazeux (pouvant être obtenu à partir d'un combustible solide) et de l'air de combustion. Cet air de combustion est introduit dans ladite chambre de combustion à travers au moins une voie d'introduction d'air, du type manche à air, qui capte de l'air lorsque ledit statoréacteur (ou le mobile aérien qui le porte) se déplace par rapport à l'air ambiant.

Ainsi, le fonctionnement d'un statoréacteur nécessite la mise en vitesse préalable dudit statoréacteur par rapport audit air ambiant.

Pour ce faire, il est usuel, dans une phase initiale de fonctionnement correspondant à la mise en vitesse dudit statoréacteur, de faire fonctionner celui-ci en fusée, grâce à un propulseur auxiliaire consommable disposé dans ladite chambre de combustion, puis, lorsque ledit statoréacteur a atteint une vitesse prédéterminée et que ledit propulseur auxiliaire est complètement consumé, on passe en fonctionnement statoréacteur proprement dit, avec injection de combustible et d'air de combustion dans la chambre de combustion.

Un tel fonctionnement bimode (mode fusée, puis mode statoréacteur) oblige à prévoir un système d'obturation pour, d'une part, obturer un orifice de ladite voie d'introduction d'air ou manche à air pendant le fonctionnement en fusée, afin d'éviter les fuites, à travers ledit orifice, des gaz engendrés par ledit propulseur auxiliaire consommable et, d'autre part, ouvrir ledit orifice de la voie d'introduction d'air ou manche à air pour le fonctionnement en statoréacteur proprement dit.

Il est connu (voir par exemple le document JP-03057867) d'utiliser comme système d'obturation une trappe basculante à ouverture commandée. Toutefois, dans ce cas, on doit généralement prévoir un système de commande particulièrement sophistiqué, évitant toute ouverture intempestive de la trappe, qui pourrait entraîner une mise à feu prématurée dudit propulseur auxiliaire consommable et, par suite, endommager le porteur (avion par exemple) d'un missile équipé dudit statoréacteur. De plus, surtout, cette trappe reste présente à bord du statoréacteur après l'ouverture de la voie d'introduction d'air, ce qui pose bien entendu des problèmes d'encombrement et entraîne la présence d'une masse parasite durant le fonctionnement statoréacteur.

Pour remédier à ce dernier inconvénient, le document FR-2 813 344 décrit un système d'obturation pour un orifice d'introduction d'air de combustion dans la chambre de combustion d'un statoréacteur, qui comporte :
- un obturateur ou couvercle en verre qui obture complètement ledit orifice pendant la phase initiale ; et
- un dispositif de destruction, à savoir un dispositif de percussion mécanique, qui détruit cet obturateur en verre, avant le fonctionnement statoréacteur. Lors de cette destruction, l'obturateur en verre est décomposé en petits fragments et ces fragments sont éjectés à l'extérieur, vers l'arrière, en passant par la chambre de combustion et la tuyère de poussée.

Par conséquent, l'obturateur est complètement éliminé lors du fonctionnement statoréacteur.

Toutefois, lors d'une utilisation opérationnelle d'un tel statoréacteur, il peut arriver que la face externe de la plaque de verre de l'obturateur soit soumise à diverses agressions (grêlons projetés lors du vol d'emport ou de la phase d'accélération, graviers projetés au décollage par la roue avant d'un aéronef porteur d'un tel statoréacteur, chocs divers, etc ...) qui sont éventuellement capables de provoquer la destruction de ladite plaque de verre.

Par conséquent, il existe un risque de destruction prématurée de l'obturateur du système d'obturation du statoréacteur, et ceci avant que les conditions requises pour passer en fonctionnement statoréacteur ne soient remplies.

La présente invention a pour objet de remédier à ces inconvénients. Elle concerne un système d'obturation pour un orifice d'un conduit, en particulier pour un orifice d'une voie d'introduction d'air dans la chambre de combustion d'un statoréacteur, qui permet d'ouvrir de façon efficace ledit orifice du conduit à un instant déterminé, tout en évitant une ouverture prématurée dudit orifice.

A cet effet, selon l'invention, ledit système d'obturation pour un orifice d'un conduit, qui comporte :
- au moins un obturateur comprenant une plaque de verre qui est susceptible d'obturer complètement ledit orifice du conduit ; et
- au moins un dispositif de destruction de ladite plaque de verre dudit obturateur,
est remarquable en ce que ledit obturateur comporte, de plus, une pluralité d'éléments de protection en élastomère, qui sont fixés sur au moins une première face de ladite plaque de verre, qui est susceptible d'être soumise à des agressions, en étant séparés les uns des autres au plus d'une distance maximale prédéterminée et en recouvrant complètement ladite première face. De préférence, ladite distance maximale est sensiblement égale à 0,5 mm.

Ainsi, grâce auxdits éléments de protection qui recouvrent complètement ladite première face de la plaque de verre, qui est susceptible d'être soumise à des agressions, on protège ladite plaque de verre contre une destruction intempestive, les espacements entre lesdits éléments de protection étant tels qu'ils empêchent une destruction de ladite plaque à leur niveau par les différentes agressions possibles.

De plus, comme lesdits éléments de protection représentent une pluralité de pièces individuelles séparées les unes des autres, ledit dispositif de destruction est toujours en mesure de détruire ledit obturateur à l'instant approprié, en agissant par exemple de façon usuelle sur la face opposée à ladite face qui est recouverte par lesdits éléments de protection.

En particulier pour faciliter la destruction de la plaque de verre par le dispositif de destruction, avantageusement, au moins certains desdits éléments de protection présentent, sur ladite première face de la plaque de verre, une forme polygonale, dont la surface est inférieure à la surface des fragments de verre obtenus lors de la destruction de ladite plaque de verre par ledit dispositif de destruction et/ou dont le côté le plus long est inférieur ou égal à la moitié de l'épaisseur de ladite plaque de verre.

Dans un mode de réalisation particulier préféré, ledit côté le plus long de la forme polygonale est sensiblement égal à la moitié de l'épaisseur de ladite plaque de verre.

En outre, avantageusement :
- ladite forme polygonale est un carré ; et
- au moins certains desdits éléments de protection sont des cubes.

Par ailleurs, de façon avantageuse, ladite plaque de verre est réalisée en un verre trempé.

En outre, dans un mode de réalisation particulier, ledit dispositif de destruction comprend :
- au moins un projectile qui est susceptible de détruire ledit obturateur en verre lorsqu'il est projeté sur ce dernier ; et
- au moins un moyen de projection commandable, qui est susceptible de projeter ledit projectile sur ledit obturateur.

Dans une application préférée, le système d'obturation conforme à l'invention est destiné à obturer un orifice d'une voie d'introduction d'air de combustion dans la chambre de combustion d'un statoréacteur, ledit statoréacteur étant de façon connue susceptible, dans une phase initiale de fonctionnement correspondant à la mise en vitesse dudit statoréacteur, de fonctionner en fusée grâce à un propulseur auxiliaire consommable disposé dans ladite chambre de combustion, puis, lorsque ledit statoréacteur atteint une vitesse prédéterminée, de fonctionner en statoréacteur proprement dit avec injection de combustible et d'air de combustion dans ladite chambre de combustion, et ledit système d'obturation comportant, de façon connue :
- au moins un obturateur comprenant une plaque de verre, qui est susceptible d'obturer complètement ledit orifice, pendant ladite phase initiale de fonctionnement en fusée ; et
- au moins un dispositif de destruction susceptible de détruire ladite plaque de verre dudit obturateur en verre de manière à ouvrir ledit orifice, pour le fonctionnement en statoréacteur.

Selon l'invention, ledit système d'obturation présente les caractéristiques précitées, la face susceptible d'être soumise à des agressions étant la face externe de ladite plaque de verre.

La présente invention concerne également un statoréacteur muni d'un système d'obturation tel que précité, ainsi qu'un missile comprenant un tel statoréacteur.

Les figures du dessin annexé feront bien comprendre comment l'invention peut être réalisée. Sur ces figures, des références identiques désignent des éléments semblables.

La figure 1 montre schématiquement, en coupe longitudinale partielle, un missile équipé d'un statoréacteur de type connu, dont les voies d'introduction d'air sont pourvues d'obturateurs faisant partie de systèmes d'obturation conformes à l'invention.

Les figures 2 et 3 montrent partiellement, respectivement en vue latérale et en vue de plan, un mode de réalisation préféré d'un obturateur conforme à l'invention.

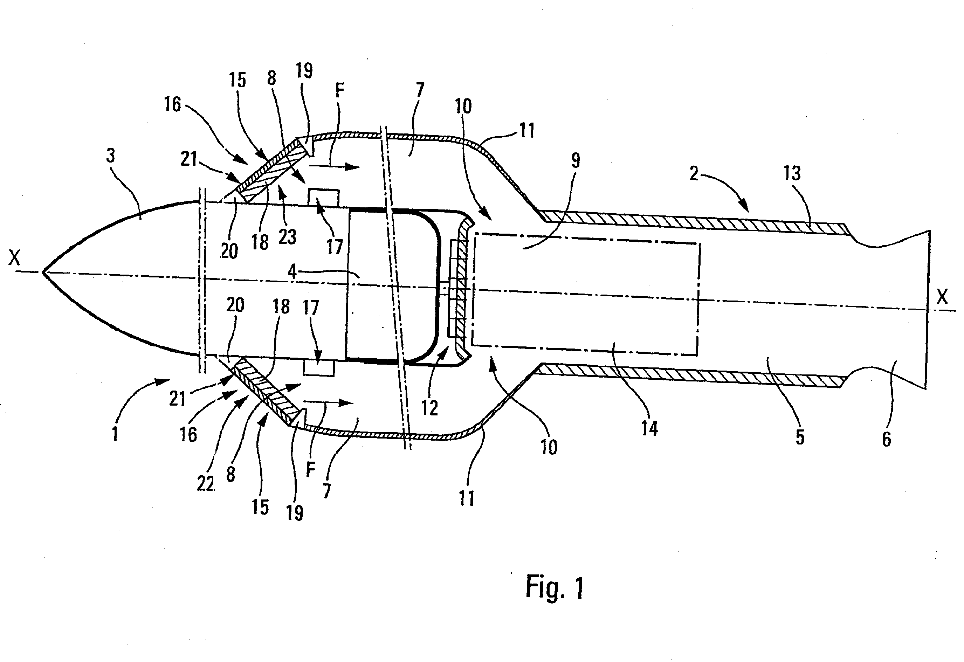

Sur la figure 1, on a représenté schématiquement, à des fins explicatives, un missile 1, d'axe longitudinal X-X, propulsé par un statoréacteur 2 de type connu.

Le missile 1 comporte un corps 3 contenant, entre autres, des appareils et charges usuels (qui ne sont pas représentés car n'étant pas impliqués par l'invention) et un réservoir de combustible 4, destiné à l'alimentation du statoréacteur 2 et fixé à la partie arrière dudit corps 3.

Le statoréacteur 2 comporte une chambre de combustion 5, se terminant à l'arrière par une tuyère d'éjection 6 et reliée, vers l'avant, à une pluralité de voies d'introduction d'air, du type manche à air 7.

Les manches à air 7 sont disposées à la périphérie du corps 3 et sont solidaires de celui-ci. Chacune d'elles, vers l'avant, comporte un orifice 8 d'entrée d'air et, vers l'arrière, débouche dans la partie avant 9 de la chambre de combustion 5 par un orifice 10 de sortie d'air de la manche 7.

Un coude 11 est prévu dans chaque manche à air 7 pour raccorder la partie de celle-ci fixée à la paroi extérieure du corps 3 à l'orifice 10 correspondant à l'entrée de la chambre de combustion 5.

Au voisinage de la partie avant 9 de la chambre de combustion 5 est prévu un dispositif 12 d'injection de combustible. Le dispositif 12 est commandé par un dispositif d'alimentation et de régulation de combustible (non représenté) porté par le corps 3 et relié au réservoir 4.

Un revêtement de protection thermique 13 est prévu sur les parois internes de la chambre de combustion 5.

Le fonctionnement du missile 1 est le suivant.

Initialement, après le largage du missile 1 de son porteur, le statoréacteur 2 n'étant pas en service, le missile 1 est mû par un propulseur auxiliaire consommable 14 (par exemple une charge de poudre) logé à l'intérieur de la chambre de combustion 5.

Quand le propulseur auxiliaire 14 est en fonctionnement, les manches à air 7 sont obturées, par des obturateurs 15 faisant partie de systèmes d'obturation 16 conformes à l'invention et précisés ci-dessous.

A la fin du fonctionnement du propulseur 14, lorsque celui-ci est complètement consumé, lesdits obturateurs 15 sont ouverts et l'air pénétrant (flèches F) dans les manches à air 7 à travers les orifices 8 est amené dans la chambre de combustion 5, à travers les orifices 10.

De plus, également à la fin du fonctionnement du propulseur consommable 14, le dispositif d'alimentation et de régulation alimente le dispositif d'injection 12 en combustible et ce dernier est enflammé. Le statoréacteur entre alors en fonctionnement et prend le relais du propulseur 14 (qui a disparu) pour propulser le missile 1.

On décrit ci-après les caractéristiques conformes à l'invention pour un seul système d'obturation 16, étant entendu que ces caractéristiques existent pour tous les systèmes d'obturation 16 du statoréacteur 2.

Ledit système d'obturation 16 est du type comportant :
- ledit obturateur 15 qui comprend une plaque de verre 18 cassable (fragmentable) précisée ci-dessous, qui est montée par des moyens usuels 19 et 20 au niveau d'un orifice de la manche à air 7 de manière à complètement obturer cet orifice ; et
- un dispositif de destruction 17 pour détruire par fragmentation ledit obturateur 15 de manière à ouvrir ledit orifice.

Ledit obturateur 15 obture l'orifice d'entrée 8 dans la manche à air 7, qui est situé en amont de cette dernière dans le sens F d'écoulement de l'air dans ladite manche à air 7.

Dans un mode de réalisation particulier non représenté, ledit dispositif de destruction 17 comprend :
- au moins un projectile qui est susceptible de détruire ledit obturateur 15 en verre, lorsqu'il est projeté sur ce dernier ; et
- un moyen de projection commandable, par exemple un percuteur pyrotechnique usuel, qui est susceptible de projeter ledit projectile et qui est agencé hors de la manche à air 7, tout en étant orienté de manière à pouvoir projeter ledit projectile sur ledit obturateur 15.

Comme l'obturateur 15 est réalisé en verre et grâce à l'efficacité du dispositif de destruction 17, le verre est décomposé en petits fragments qui sont évacués par l'air de combustion et sont éjectés hors du statoréacteur 2, vers l'arrière, via la manche à air 7, la chambre de combustion 5 et la tuyère d'éjection 6. Par conséquent, l'obturateur 15 est complètement éliminé après sa destruction.

Selon l'invention, pour empêcher une ouverture prématurée dudit orifice 8 suite à des agressions externes (grêlons, chocs divers, ...), ledit obturateur 15 comporte, de plus, une pluralité d'éléments de protection 21 qui sont en élastomère, qui sont fixés sur la face externe 22 de ladite plaque de verre 18, c'est-à-dire sur la face qui est susceptible d'être soumise à des agressions (externes), en étant séparés les uns des autres au plus d'une distance maximale prédéterminée et en recouvrant complètement ladite face externe 22.

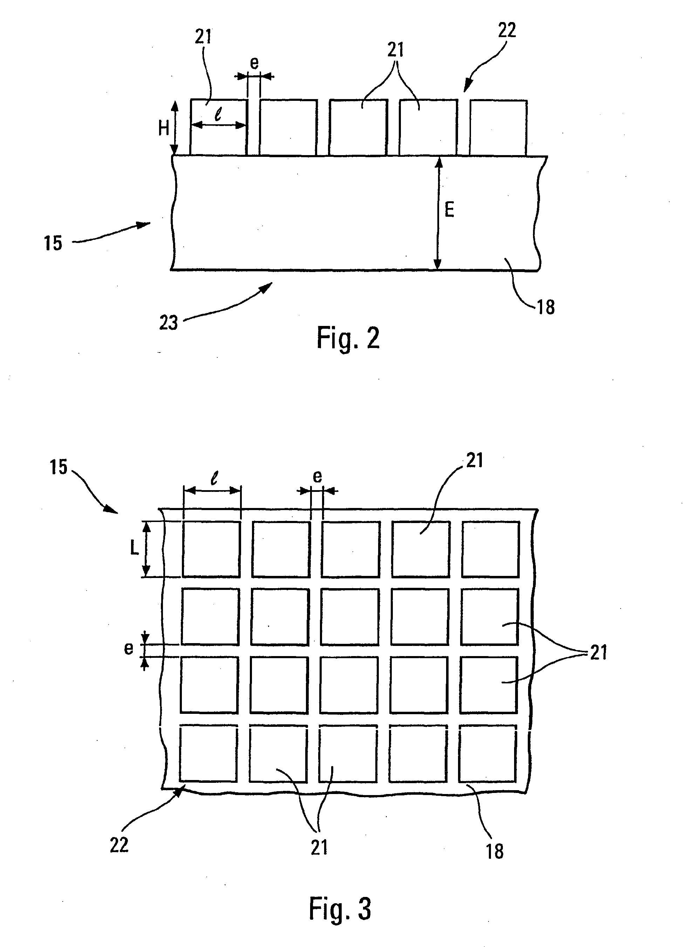

Ainsi, grâce auxdits éléments de protection 21 qui recouvrent complètement ladite face externe 22 (qui est susceptible d'être soumise à des agressions) de la plaque de verre 18, on protège ladite plaque de verre 18 contre une destruction intempestive, les espacements e (figure 2) entre lesdits éléments de protection 21 étant selon l'invention tels qu'ils empêchent une destruction de ladite plaque 18 à leur niveau par des agressions externes.

De préférence, lesdits espacements e sont uniformes et sont, par exemple, sensiblement égaux à 0,5 mm.

De plus, comme lesdits éléments de protection 21 représentent une pluralité de pièces individuelles séparées les unes des autres, ledit dispositif de destruction 17 est toujours en mesure de détruire ledit obturateur 15 à l'instant approprié, en agissant de préférence de façon usuelle sur la face 23 opposée à ladite face 22, ladite face 23 n'étant pas recouverte par des éléments de protection 21.

Pour faciliter la destruction de la plaque de verre 18 par le dispositif de destruction 17, lesdits éléments de protection 21 présentent, sur ladite face externe 22 de la plaque de verre 18, une forme polygonale, de préférence une forme carrée (de côtés ℓ et L égaux), dont la surface est inférieure à la surface des fragments de verre obtenus lors de la destruction de ladite plaque de verre 18 par ledit dispositif de destruction 17 et/ou dont le côté le plus long ℓ ou L est inférieur ou égal à la moitié de l'épaisseur E de ladite plaque de verre 18.

Dans un mode de réalisation particulier préféré, ledit côté le plus long ℓ ou L de la forme polygonale est sensiblement égal à la moitié de l'épaisseur E de ladite plaque de verre 18.

A titre d'exemple, les côtés ℓ et L peuvent être sensiblement égaux à 4 mm et l'épaisseur E peut être sensiblement égale à 8 mm.

Quant à la hauteur H desdits éléments de protection 21, elle doit être suffisante pour permettre un amortissement efficace des agressions. Elle dépend donc du matériau d'élastomère utilisé et des agressions externes redoutées.

Dans le mode de réalisation préféré représenté sur les figures 2 et 3, lesdits éléments de protection 21 sont des cubes, de sorte que H=ℓ=L.

Par ailleurs, dans un mode de réalisation préféré :
- ladite plaque de verre 18 est réalisée en un verre trempé, tel que verre sodocalcique trempé "T152" ; et
- ledit élastomère est du silicone "60 Shores" (MF 370 + MF 345).

## Revendications

1. Système d'obturation pour un orifice (8) d'une voie d'introduction d'air (7) d'une chambre de combustion (5) d'un statoréacteur (2), ledit système d'obturation (16) comportant :
- au moins un obturateur (15) comprenant une plaque de verre (18) qui est susceptible d'obturer complètement ledit orifice (8) de la voie d'introduction d'air (7) ;
- au moins un dispositif de destruction (17) de ladite plaque de verre (18) dudit obturateur (15),
**caractérisé en ce que** ledit obturateur (15) comporte, de plus, une pluralité d'éléments de protection (21) en élastomère qui sont fixés sur au moins une première face (22) de ladite plaque de verre (18), qui est susceptible d'être soumise à des agressions, en étant séparés les uns des autres au plus d'une distance maximale prédéterminée et en s'étendant sur toute ladite première face (22).

2. Système d'obturation selon la revendication 1,
**caractérisé en ce que** ladite distance maximale est sensiblement égale à 0,5 mm.

3. Système d'obturation selon l'une des revendications 1 et 2,
**caractérisé en ce qu**'au moins certains desdits éléments de protection (21) présentent, sur ladite première face (22) de la plaque de verre (18), une forme polygonale, dont la surface est inférieure à la surface des fragments de verre obtenus lors de la destruction de ladite plaque de verre (18) par ledit dispositif de destruction (17).

4. Système d'obturation selon l'une des revendications 1 à 3,
**caractérisé en ce qu**'au moins certains desdits éléments de protection (21) présentent, sur ladite première face (22) de la plaque de verre (18), une forme polygonale, dont le côté (L, ℓ) le plus long est inférieur ou égal à la moitié de l'épaisseur (E) de ladite plaque de verre (18).

5. Système d'obturation selon la revendication 4,
**caractérisé en ce que** ledit côté le plus long (L, ℓ) de la forme polygonale, est sensiblement égal à la moitié de l'épaisseur (E) de ladite plaque de verre (18).

6. Système d'obturation selon l'une quelconque des revendications 3 à 5,
**caractérisé en ce que** ladite forme polygonale est un carré.

7. Système d'obturation selon l'une quelconque des revendications précédentes,
**caractérisé en ce qu**'au moins certains desdits éléments de protection (21) sont des cubes.

8. Système d'obturation selon l'une quelconque des revendications précédentes,
**caractérisé en ce que** ladite plaque de verre (18) est réalisée en un verre trempé.

9. Système d'obturation selon l'une quelconque des revendications précédentes,
**caractérisé en ce que** ledit dispositif de destruction (17) comprend :
- au moins un projectile qui est susceptible de détruire ledit obturateur (15) en verre lorsqu'il est projeté sur ce dernier ; et
- au moins un moyen de projection commandable, qui est susceptible de projeter ledit projectile sur ledit obturateur (15).

10. Statoréacteur (2) comportant une chambre de combustion (5), pourvue d'au moins une voie (7) pour introduire de l'air de combustion à l'intérieur de ladite chambre de combustion (5), et un système d'obturation (16) pour un orifice (8) de ladite voie d'introduction d'air de combustion (7), ledit statoréacteur (2) étant susceptible, dans une phase initiale de fonctionnement correspondant à la mise en vitesse dudit statoréacteur, de fonctionner en fusée grâce à un propulseur auxiliaire consommable (14) disposé dans ladite chambre de combustion (5), puis, lorsque ledit statoréacteur (2) atteint une vitesse prédéterminée, de fonctionner en statoréacteur proprement dit avec injection de combustible et d'air de combustion dans ladite chambre de combustion (5), et ledit système d'obturation (16) comportant :
- au moins un obturateur (15) comprenant une plaque de verre (18) qui est susceptible d'obturer complètement ledit orifice (8), pendant ladite phase initiale de fonctionnement en fusée ; et
- au moins un dispositif de destruction (17) susceptible de détruire ladite plaque de verre (18) dudit obturateur (15) de manière à ouvrir ledit orifice (8), pour le fonctionnement en statoréacteur,
**caractérisé en ce que** ledit système d'obturation (16) est du type de celui spécifié sous l'une quelconque des revendications 1 à 9.

11. Missile,
**caractérisé en ce qu**'il comporte un statoréacteur (2) selon la revendication 10.

## Claims

1. Blanking-plug system for blanking off an orifice (8) of an air intake duct (7) of a combustion chamber (5) of a ramjet (2), said blanking-plug system (16) comprising:
- at least one blanking plug (15) comprising a glass plate (18) which is able to completely blank off said orifice (8) of the air intake duct (7);
- at least one device (17) for destroying said glass plate (18) of said blanking plug (15),
**characterized in that** said blanking plug (15) additionally comprises a plurality of elastomer protective elements (21) which are fixed on at least one first face (22) of said glass plate (18) which is likely to be subject to attack, these elements being separated from one another by a predetermined maximum distance at most, and extending over the entire said first face (22).

2. Blanking-plug system according to Claim 1, **characterized in that** said maximum distance is roughly equal to 0.5 mm.

3. Blanking-plug system according to either of Claims 1 and 2, **characterized in that** at least some of said protective elements (21) have, on said first face (22) of the glass plate (18), a polygonal shape, the area of which is smaller than the area of the fragments of glass obtained when said glass plate (18) is destroyed by said destroying device (17).

4. Blanking-plug system according to one of Claims 1 to 3, **characterized in that** at least some of said protective elements (21) have, on said first face (22) of the glass plate (18)-, a polygonal shape, of which the longest side (L, ℓ) is shorter than or equal to half the thickness (E) of said glass plate (18).

5. Blanking-plug system according to Claim 4, **characterized in that** said longest side (L, ℓ) of the polygonal shape is roughly equal to half the thickness (E) of said glass plate (18).

6. Blanking-plug system according to any one of Claims 3 to 5, **characterized in that** said polygonal shape is a square.

7. Blanking-plug system according to any one of the preceding claims, **characterized in that** at least some of said protective elements (21) are cubes.

8. Blanking-plug system according to any one of the preceding claims, **characterized in that** said glass plate (18) is made of a toughened glass.

9. Blanking-plug system according to any one of the preceding claims, **characterized in that** said destroying device (17) comprises:
- at least one projectile able to destroy said glass blanking plug (15) when thrown against the latter; and
- at least one controllable projection means capable of throwing said projectile against said blanking plug (15).

10. Ramjet (2) comprising a combustion chamber (5) provided with at least one duct (7) for the intake of combustion air into said combustion chamber (5), and a blanking-plug system (16) for blanking off an orifice (8) of said combustion air intake duct (7), said ramjet (2) being able, in an initial phase of operation corresponding to said ramjet being brought up to speed, of operating as a rocket using a consumable auxiliary thruster (14) arranged in said combustion chamber (5) then, when said ramjet (2) reaches a predetermined speed, of operating as an actual ramjet with fuel and combustion air injected into said combustion chamber (5), and said blanking-plug system (16) comprising:
- at least one blanking plug (15) comprising a glass plate (18) able to completely blank off said orifice (8) during said initial phase of operation as a rocket; and
- at least one destroying device (17) capable of destroying said glass plate (18) of said blanking plug (15) so as to open said orifice (8), for operation as a ramjet,
**characterized in that** said blanking-plug system (16) is of the type specified in any one of Claims 1 to 9.

11. Missile **characterized in that** it comprises a ramjet (2) according to Claim 10.

## Patentansprüche

1. Verschlusssystem für eine Öffnung (8) einer Lufteinlassleitung (7) einer Brennkammer (5) eines Staustrahltriebwerks (2), wobei das Verschlusssystem (16) umfasst:
- mindestens einen Verschluss (15) mit einer Glasplatte (18), die in der Lage ist, die Öffnung (8) der Lufteinlassleitung (7) vollständig zu verschließen;
- mindestens eine Zerstörungsvorrichtung (17) zur Zerstörung der Glasplatte (18) des Verschlusses (15),
**dadurch gekennzeichnet, dass** der Verschluss (15) darüber hinaus eine Vielzahl von Schutzelementen (21) aus Elastomer umfasst, die an mindestens einer ersten Seite (22) der Glasplatte (18) befestigt sind, die Aggressionen ausgesetzt sein kann, wobei diese Elemente höchstens mit einer vorbestimmten maximalen Distanz voneinander beabstandet sind und sich über die ganze erste Seite (22) erstrecken.

2. Verschlusssystem nach Anspruch 1, **dadurch gekennzeichnet, dass** die maximale Distanz im Wesentlichen gleich 0,5 mm ist.

3. Verschlusssystem nach einem der Ansprüche 1 und 2, **dadurch gekennzeichnet, dass** mindestens einige der Schutzelemente (21) auf der ersten Seite (22) der Glasplatte (18) eine polygonale Form aufweisen, deren Oberfläche kleiner ist als die Oberfläche der Glasfragmente, die bei der Zerstörung der Glasplatte (18) durch die Zerstörungsvorrichtung (17) gewonnen werden.

4. Verschlusssystem nach einem der Ansprüche 1 bis 3, **dadurch gekennzeichnet, dass** mindestens einige der Schutzelemente (21) auf der ersten Seite (22) der Glasplatte (18) eine polygonale Form aufweisen, deren längste Seite (ℓ, L) kleiner als die oder gleich der Hälfte der Dicke (E) der Glasplatte (18) ist.

5. Verschlusssystem nach Anspruch 4, **dadurch gekennzeichnet, dass** die längste Seite (ℓ, L) der polygonalen Form im Wesentlichen gleich der Hälfte der Dicke (E) der Glasplatte (18) ist.

6. Verschlusssystem nach einem der Ansprüche 3 bis 5, **dadurch gekennzeichnet, dass** die polygonale Form ein Quadrat ist.

7. Verschlusssystem nach einem der vorhergehenden Ansprüche, **dadurch gekennzeichnet, dass** mindestens einige der Schutzelemente (21) Würfel sind.

8. Verschlusssystem nach einem der vorhergehenden Ansprüche, **dadurch gekennzeichnet, dass** die Glasplatte (18) aus vorgespanntem Glas hergestellt ist.

9. Verschlusssystem nach einem der vorhergehenden Ansprüche, **dadurch gekennzeichnet, dass** die Zerstörungsvorrichtung (17) umfasst:
- mindestens ein Geschoß, das in der Lage ist, den Verschluss (15) aus Glas zu zerstören, wenn es auf den Letztgenannten geschleudert wird; und
- mindestens ein steuerbares Schleudermittel, das in der Lage ist, das Geschoß auf den Verschluss (15) zu schleudern.

10. Staustrahltriebwerk (2), umfassend eine Brennkammer (5), die mit mindestens einer Leitung (7) zum Einlass von Verbrennungsluft in das Innere der Brennkammer (5) versehen ist, und ein Verschlusssystem (16) für eine Öffnung (8) der Verbrennungsluft-Einlassleitung (7), wobei das Staustrahltriebwerk (2) in der Lage ist, in einer Betriebsanfangsphase, die dem Hochfahren des Staustrahltriebwerks entspricht, durch ein sich aufbrauchendes, in der Brennkammer (5) angeordnetes Hilfstreibmittel (14) als Rakete zu funktionieren, und sodann, wenn das Staustrahltriebwerk (2) eine vorbestimmte Geschwindigkeit erreicht, als Staustrahltriebwerk im eigentlichen Sinn mit Einspritzung von Brennstoff und Verbrennungsluft in die Brennkammer (5) zu funktionieren, und wobei das Verschlusssystem (16) umfasst:
- mindestens einen Verschluss (15) mit einer Glasplatte (18), die in der Lage ist, die Öffnung (8) während der Betriebsanfangsphase als Rakete vollständig zu verschließen; und
- mindestens eine Zerstörungsvorrichtung (17), die in der Lage ist, die Glasplatte (18) des Verschlusses (15) zu zerstören, so dass die Öffnung (8) zum Betrieb als Staustrahltriebwerk geöffnet wird,
**dadurch gekennzeichnet, dass** das Verschlusssystem (16) von dem Typ ist, der in einem der Ansprüche 1 bis 9 spezifiziert wird.

11. Flugkörper, **dadurch gekennzeichnet, dass** er ein Staustrahltriebwerk (2) nach Anspruch 10 umfasst.
